# EUROPEAN PATENT APPLICATION

(11) **EP 4 354 563 A1**
(43) Date of publication of application: **17.04.2024**
(21) Application number: 21945050.9
(22) Date of filing: 08.06.2021
(51) Int. Cl.: H01M 8/1226

(54) **SOLID OXIDE FUEL CELL AND METHOD FOR PRODUCING SOLID OXIDE FUEL CELL**

(71) Applicant: NISSAN MOTOR CO., LTD., Kanagawa 221-0023 (JP)
(72) Inventor: AOYAMA, Yusuke, Atsugi-shi, Kanagawa 243-0123 (JP); SHIOMI, Takeshi, Atsugi-shi, Kanagawa 243-0123 (JP); ICHIHARA, Keiji, Atsugi-shi, Kanagawa 243-0123 (JP)
(74) Representative: Grünecker Patent- und Rechtsanwälte PartG mbB
(86) International application number: PCT/JP2021/021776
(87) International publication number: WO 2022/259372

(57) **Abstract**

This solid oxide fuel cell is configured by stacking, in the thickness direction, a plurality of power generating cells having a solid electrolyte plate, an anode electrode disposed to one surface of the solid electrolyte plate, an anode support layer supporting the anode electrode, a cathode electrode disposed to the other surface of the solid electrolyte plate, and a cathode support layer supporting the cathode electrode, the power generating cells being stacked via an interconnector for electrically connecting the anode support layer of one of adjacent power generating cells and the cathode support layer of another of the adjacent power generating cells, wherein: the anode support layer and the cathode support layer are formed of a ferritic stainless steel; and the interconnector is formed of a ferritic stainless steel containing aluminum.

## Description

### TECHNICAL FIELD

The present invention relates to a solid oxide fuel cell and a method for producing a solid oxide fuel cell.

### BACKGROUND ART

JP2006-236989A discloses a fuel cell in which a plurality of unit cells each having a metal supporting board on both surfaces of a membrane electrode assembly are laminated via an interconnector using ferritic stainless steel as a base material.

### SUMMARY OF INVENTION

The interconnector using ferritic stainless steel as a base material is disadvantageously corroded during use in a fuel cell, but the above document does not disclose a measure to suppress the corrosion. In the above document, the interconnector has a thickness of 0.5 mm to 1.5 mm. The reason for this is considered to be that, due to a sufficient thickness, even if the corrosion progresses, deterioration of the interconnector such as hole perforation does not occur.

However, if a higher output density is required, such as in-vehicle use, it is necessary to further reduce the thickness of the interconnector, and thus it is impossible to prevent the deterioration of the interconnector due to the corrosion by giving a sufficient thickness as in the above document.

Therefore, an object of the present invention is to provide a fuel cell capable of suppressing corrosion of an interconnector.

According to one embodiment of the present invention, a solid oxide fuel cell is provided, in which a plurality of power generation cells are laminated in a thickness direction via an interconnector, wherein the power generation cells each include a solid electrolyte plate, an anode electrode disposed on one surface of the solid electrolyte plate, an anode support layer configured to support the anode electrode, a cathode electrode disposed on the other surface of the solid electrolyte plate, and a cathode support layer configured to support the cathode electrode, and the interconnector is configured to electrically connect the anode support layer of one of the adjacent power generation cells and the cathode support layer of the other one of the adjacent power generation cells. The anode support layer and the cathode support layer are made of ferritic stainless steel, and the interconnector is made of ferritic stainless steel containing aluminum.

### BRIEF DESCRIPTION OF DRAWINGS

[FIG. 1] FIG. 1 is a schematic cross-sectional view of a solid oxide fuel cell according to an embodiment of the present invention.
[FIG. 2] FIG. 2 is an enlarged view of a region II in FIG. 1.
[FIG. 3] FIG. 3 is an enlarged view of a region III in FIG. 2.
[FIG. 4] FIG. 4 is a schematic cross-sectional view of a solid oxide fuel cell according to a modification.

### DESCRIPTION OF EMBODIMENTS

Hereinafter, an embodiment of the present invention will be described with reference to the drawings.

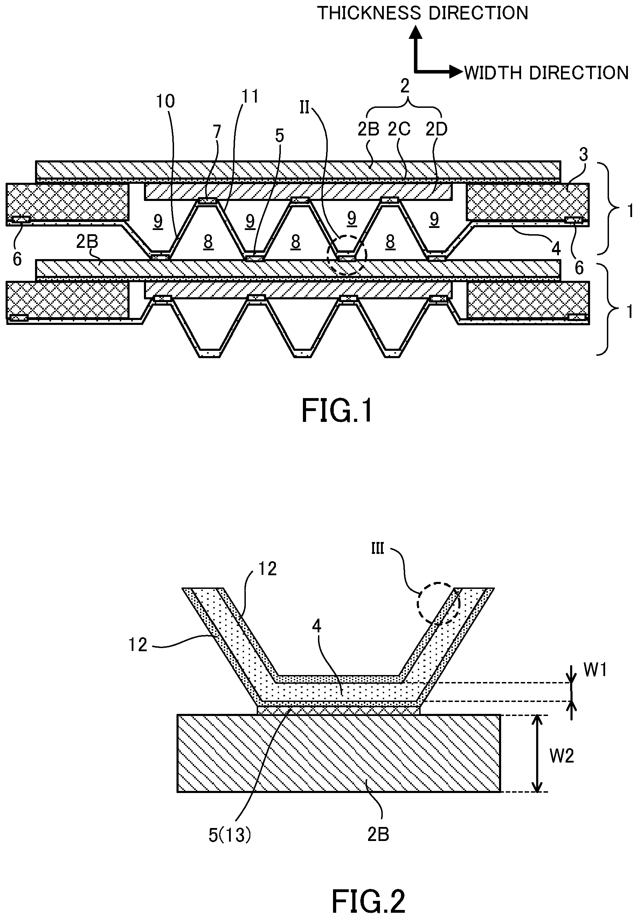

FIG. 1 is a schematic cross-sectional view of a lamination portion of a power generation unit 1 constituting a power generation module of a solid oxide fuel cell (hereinafter, also simply referred to as a "fuel cell") according to the present embodiment.

The power generation unit 1 includes a power generation cell 2, cell frames 3 each supporting an outer edge portion of the power generation cell 2, and an interconnector 4 joined to an anode support layer 2D and the cell frame 3.

The power generation cell 2 includes a membrane electrode assembly 2C in which an anode electrode is formed on one surface of a solid electrolyte plate and a cathode electrode is formed on the other surface of the solid electrolyte plate, a cathode support layer 2B for supporting the cathode electrode, and the anode support layer 2D for supporting the anode electrode. Each of the cathode support layer 2B and the anode support layer 2D is formed of a metal, for example, ferritic stainless steel (hereinafter, also referred to as FSS).

The interconnector 4 is formed of a single plate material using ferritic stainless steel containing aluminum (hereinafter, also referred to as AL-containing FSS) as a base material. Cathode side ribs 10 each protruding toward the cathode electrode of one power generation unit 1 in a laminated state and anode side ribs 11 each protruding toward the anode electrode of the other power generation unit 1 are provided by press working or the like.

Joining between the anode side rib 11 and the anode support layer 2D (a joining portion 7 in the drawing) and joining between the interconnector 4 and the cell frame 3 (a joining portion 6 in the drawing) may be performed by a method such as welding or joining using an insert member, and the joining using an insert member is used in the present embodiment. The insert member to be used will be described later.

The two power generation units 1 are laminated by metal-joining the cathode side rib 10 of one power generation unit 1 to the power generation cell 2 of the other power generation unit 1 by a method other than welding, for example, joining using an insert member (a joining portion 5 in the drawing). That is, the interconnector 4 has a function of electrically connecting the anode electrode and the cathode electrode adjacent thereto. Further, when laminating more power generation units 1, the power generation units 1 are similarly metal-joined to each other by diffusion joining or the like. The reason why welding is not used as a method for joining the power generation units 1 is that a welding machine cannot access a contact portion between the cathode side rib 10 and the power generation cell 2 in a state in which the power generation units 1 are in contact with each other.

The joining using the insert member at the joining portions 5 and 6 will be described later.

The configuration of the power generation unit 1 is not limited to the above. For example, the power generation unit 1 may be obtained by welding the interconnector 4 to the cathode support layer 2B of the power generation cell 2, and the interconnector 4 of the power generation unit 1 and the anode support layer 2D of the other power generation unit 1 may be metal-joined.

By joining the cathode side rib 10 and the cathode support layer 2B, a space surrounded by one surface of the interconnector 4 and the cathode support layer 2B is formed. This space is referred to as a cathode flow path 8 through which cathode gas flows. On the other hand, by joining the anode side rib 11 and the anode support layer 2D, a space surrounded by the other surface of the interconnector 4 and the anode support layer 2D is formed. This space is referred to as an anode flow path 9 through which anode gas flows. That is, the interconnector 4 also serves as a partition plate that defines the cathode flow path 8 and the anode flow path 9. When a flow rate of the cathode gas flowing through the cathode flow path 8 is compared with a flow rate of the anode gas flowing through the anode flow path 9, the flow rate of the cathode gas is higher.

Due to the above configuration, current flows from the anode electrode of the power generation unit 1 on a lower side in the drawing to the cathode electrode of the power generation unit 1 on an upper side in the drawing via the interconnector 4.

During operation of the fuel cell, the anode electrode generating reaction heat becomes a heating unit, and an anode side including the anode support layer 2D rises in temperature. In the fuel cell according to the present embodiment, the anode support layer 2D supporting the anode electrode is not only in contact with the anode flow path 9 but also in contact with the cathode flow path 8 via the anode side rib 11. That is, the anode support layer 2D is in contact with the cathode flow path 8 through which the cathode gas having a flow rate higher than that of the anode gas flows, whereby heat exchange between the anode support layer 2D and the cathode gas is promoted, and as a result, cooling on the anode side is promoted. By cooling the anode side, water vapor oxidation described later is suppressed, and thus corrosion of the interconnector 4 can be suppressed.

When the interconnector 4 is made of FSS, there is a problem of how to suppress the corrosion of the interconnector 4.

A temperature of the fuel cell becomes high during operation, and a surface forming the cathode flow path 8 of the interconnector 4 (also referred to as a cathode side surface) is exposed to air. Therefore, the cathode side surface of the interconnector 4 is likely to be oxidized by oxygen in the air (hereinafter, this oxidation is also referred to as atmospheric oxidation). On the other hand, a surface forming the anode flow path of the interconnector 4 (also referred to as an anode side surface) is exposed to water vapor generated by a reaction, and thus the anode side surface is likely to be oxidized by the water vapor (hereinafter, this oxidation is also referred to as water vapor oxidation). The corrosion of the interconnector 4 progresses due to the two types of oxidation.

Hydrogen has a property of diffusing inside the interconnector 4 made of FSS. When the diffused hydrogen moves from an anode side interface to a cathode side interface inside the interconnector 4, water is generated by being bound to the air flowing through the cathode flow path 8, and corrosion due to water (this is called dual-corrosion) occurs. The dual-corrosion is particularly likely to occur in a case in which the interconnector 4 is formed thin by press molding or the like.

In addition, corrosion due to evaporation of chromium, which is contained in FSS for corrosion resistance, under high temperature conditions may also occur (hereinafter, this corrosion is also referred to as Cr evaporation).

As the above atmospheric oxidation, water vapor oxidation, dual-corrosion, and Cr evaporation (hereinafter, collectively referred to as "corrosion") progress, the interconnector 4 is deteriorated (specifically, strength reduction, hole perforation, or the like). As a measure to prevent deterioration due to the atmospheric oxidation, the water vapor oxidation, and the dual-corrosion, it is conceivable to increase the thickness of the base material of the interconnector 4. That is, even if the corrosion progresses, it is possible to ensure strength, and it is possible to prevent the degradation by setting a thickness with which hole perforation will not occur. However, when the fuel cell is mounted on a vehicle, that is, when a higher output density is required as in a case of using the fuel cell as a drive source of the vehicle, in order to suppress a dimension in a thickness direction, it is preferable that the thickness of the interconnector 4 is thin, and thus this measure is inappropriate.

The atmospheric oxidation can be suppressed by lowering an operating temperature range of the fuel cell, but with respect to the water vapor oxidation, a temperature range in which oxidation can be suppressed is very narrow, and the temperature range is different from the operating temperature range of the fuel cell (for example, 600°C to 750°C). The Cr evaporation and the dual-corrosion cannot be suppressed by adjusting the operating temperature range of the fuel cell.

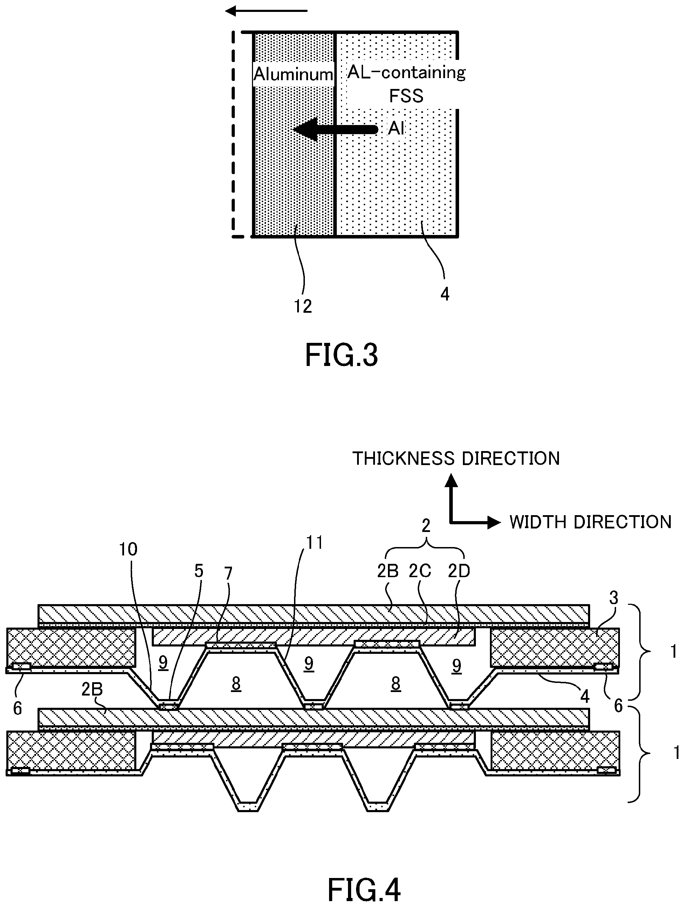

Therefore, in the present embodiment, the AL-containing FSS is used as the base material for the interconnector 4 as described above. This is because the corrosion is suppressed by forming a thin alumina layer on each of outermost layers of the interconnector 4 during the operation or during a stack laminating step of the fuel cell, and corrosion resistance can be secured even when the thickness of the interconnector 4 is thin. This will be described with reference to FIGS. 2 and 3. FIG. 2 is an enlarged view of a region II in FIG. 1. FIG. 3 is an enlarged view of a region III in FIG. 2.

First, a mechanism for forming the alumina layer will be described. First, aluminum in the vicinity of an outer surface layer of the interconnector 4 is oxidized and alumina layers 12 are formed on the outermost layers of the interconnector 4. Accordingly, a concentration gradient of aluminum is generated inside the interconnector 4 in which the concentration is low in a portion close to the outer surface (hereinafter, also referred to as an outer layer side) and high in a portion close to the center (hereinafter, also referred to as a center side). The concentration gradient becomes a driving force that moves aluminum from the center side to the outer layer side (a direction of an arrow illustrated in FIG. 3), and an alumina layer is further formed.

In the present embodiment, a content of aluminum in the AL-containing FSS used as the base material for the interconnector 4 is preferably 2 wt% or more. This is because the alumina layer is stably formed as the outermost surface layer of the base material, and the corrosion of the interconnector 4 can be further suppressed.

The content of aluminum in the AL-containing FSS is preferably 10 wt% or less. The reason is as follows. When the content of aluminum in the AL-containing FSS exceeds 10 wt%, a binding state changes from a solid solution of a metal bond to an intermetallic compound of an ionic bond or a covalent bond. As generally known, the ionic bond or the covalent bond is high in hardness but low in toughness compared with the metal bond. That is, when the content of aluminum exceeds 10 wt%, toughness may be reduced, and strength against a compressive load to be applied in the laminating step or vibration in an in-vehicle state may not be maintained.

The AL-containing FSS as described above has a thickness W1 smaller than a thickness W2 of the cathode support layer 2B. A relation with the anode support layer 2D is the same, and the thickness W1 of the AL-containing FSS is smaller than a thickness of the anode support layer 2D. When the interconnector 4 is thicker than the support layers 2B and 2D, even if the support layers 2B and 2D are made of metal, strength of the support layers 2B and 2D may be insufficient with respect to a compressive load applied from the interconnector 4 to the power generation cell 2 in the laminating step. Therefore, by making the interconnector 4 smaller than the support layers 2B and 2D, a balance between the compressive load and the strength of the support layers 2B and 2D is optimized.

Next, an insert member 13 to be used for the joining portions 5 and 6 will be described.

When aluminum contained in the interconnector 4 flows out to the support layers 2B and 2D and an aluminum content of the interconnector 4 is less than 2 wt% in the joining portions 5 and 6, the alumina layer 12 is less likely to be formed on the outermost layer of the interconnector 4. In particular, when the interconnector 4 and the support layers 2B and 2D are directly joined to each other by welding, diffusion joining, or the like without using the insert member 13, FSS and AL-containing FSS are brought into contact with each other in the joining portions 5 and 6, and aluminum easily flows out. Therefore, the insert member 13 having a material having a small mutual diffusion coefficient with aluminum as a main component is used as compared with the case of direct joining.

Examples of the main component of the insert member 13 include nickel. A mutual diffusion coefficient of nickel and aluminum is very small as about 1/100000 to 1/10000 of the mutual diffusion coefficient of FSS and aluminum, and thus the outflow of aluminum from the interconnector 4 to the insert member 13 is suppressed, and the alumina layer 12 can be stably formed.

Instead of using a material having a small mutual diffusion coefficient with aluminum as described above, a material containing aluminum (for example, AL-containing FSS) may be used for the insert member 13. When the insert member 13 contains aluminum, a concentration gradient of aluminum between the interconnector 4 and the insert member 13 becomes small, and the outflow of aluminum from the interconnector 4 to the insert member 13 is suppressed. A material containing nickel as a main component and containing aluminum may be used for the insert member 13.

When the AL-containing FSS is used for the insert member 13, a paste is more preferable than a foil material. This is because the content of aluminum can be easily adjusted in a paste, and a heating temperature in a joining step can be suppressed.

In the above configuration, the formation of the alumina layer starts in the outermost layer of the interconnector 4 during the laminating step of laminating the plurality of power generation units 1 or during the operation of the fuel cell. That is, in a stage before the laminating step, the alumina layer is not formed on the outermost layer of the interconnector 4. However, a pre-oxidation step of performing an oxidation treatment on the interconnector may be performed before performing the laminating step. Here, "before performing the laminating step" may be either immediately before the laminating step, or before or after molding of the interconnector 4.

By performing the pre-oxidation step, a formation period of the alumina layer formed during the operation of the fuel cell can be shortened. Accordingly, a water vapor oxidation resistance in a lower temperature range at startup or the like is improved.

In the pre-oxidation step, the interconnector 4 is heated to 900°C or higher. By performing the oxidation treatment at 900°C or higher, the formed alumina layer becomes so-called α-alumina. The α-alumina is high in stability and is hard to grow abnormally, and thus a supply rate of aluminum for forming the alumina layer is suppressed. As a result, the water vapor oxidation resistance can be maintained over a long period.

Next, a modification of the present embodiment will be described. The present modification also belongs to the scope of the present invention as in the present embodiment.

FIG. 4 is a schematic cross-sectional view of a lamination portion of the power generation unit 1 constituting a power generation module of a fuel cell according to the present modification.

In FIG. 1, a width of the contact portion (that is, the joining portion 7) between the anode side rib 11 and the anode support layer 2D is equal to a width of the contact portion (that is, the joining portion 5) between the cathode side rib 10 and the cathode support layer 2B. On the other hand, in the present modification, as illustrated in FIG. 4, a width of the joining portion 7 is larger than a width of the joining portion 5. In other words, as compared with the configuration of the embodiment described above, a configuration of the present modification has a large contact area between the anode support layer 2D and the cathode flow path 8, that is, has a large heat exchange area between the anode support layer 2D and the cathode flow path 8. Due to the large heat exchange area, a temperature on an anode side is reduced, and thus water vapor oxidation in a high-temperature environment is further suppressed, and as a result, a corrosion resistance of the interconnector 4 can be secured.

Functions and effects of the present embodiment and the modification thereof will be collectively described below.

The present embodiment provides the solid oxide fuel cell, in which a plurality of the power generation cells 2 are laminated in the thickness direction via the interconnector 4, the power generation cell 2 includes the solid electrolyte plate, the anode electrode disposed on one surface of the solid electrolyte plate, the anode support layer 2D configured to support the anode electrode, the cathode electrode disposed on the other surface of the solid electrolyte plate, and the cathode support layer 2B configured to support the cathode electrode, the interconnector 4 is configured to electrically connect the anode support layer 2D of one of the power generation cells 2 adjacent to each other and the cathode support layer 2B of the other power generation cell 2. The anode support layer 2D and the cathode support layer 2B are made of ferritic stainless steel, and the interconnector 4 is made of ferritic stainless steel containing aluminum. Accordingly, during the operation of the fuel cell or during the laminating step, the alumina layer is formed on the outermost layer of the interconnector 4. The formation of the alumina layer suppresses the water vapor oxidation of the interconnector 4, thereby ensuring the corrosion resistance.

In the present embodiment, the thickness of the base material for the interconnector 4 is smaller than the thicknesses of the support layers 2B and 2D. Accordingly, the balance between the compressive load applied from the interconnector 4 to the power generation cell 2 and the strength of the support layers 2B and 2D can be appropriately maintained in the laminating step. By further reducing the thickness of the base material for the interconnector 4, a heat capacity of the interconnector 4 is reduced, and thus the time required to start the fuel cell can be shortened.

In the present embodiment, the interconnector 4 is formed of a single plate material, and includes the cathode side rib 10 protruding toward the cathode electrode, and the anode side rib 11 protruding toward the anode electrode, and the cathode side rib 10 is in contact with the cathode support layer 2B, and the anode side rib 11 is in contact with the anode support layer 2D. Accordingly, the anode support layer 2D supporting the anode electrode, which is the heating unit, is in contact with the cathode flow path 8 through which the cathode gas having a flow rate higher than that of the anode gas flows, and thus the temperature of the heating unit can be further reduced. By reducing the temperature of the heating unit, the water vapor oxidation in a high-temperature environment is suppressed, and thus the corrosion resistance of the interconnector 4 can be ensured.

According to the modification of the present embodiment, the width of the contact portion between the anode side rib 11 and the anode support layer 2D is larger than the width of the contact portion between the cathode side rib 10 and the cathode support layer 2B. Accordingly, the heat exchange area between the anode support layer 2D and the cathode flow path 8 is further increased, and a cooling effect on the heating unit is further improved.

In the present embodiment, the connection portion between the interconnector 4 and the anode support layer 2D of one of the power generation cells 2 adjacent to each other and the connection portion between the interconnector 4 and the cathode support layer 2B of the other power generation cell 2 are joined to each other via the insert member 13. The insert member 13 contains, as a main component, a material having a smaller mutual diffusion coefficient with aluminum in a joining surface compared with a case in which the interconnector 4 is joined to the anode support layer 2D and the cathode support layer 2B without the insert member 13 interposed therebetween. Accordingly, the outflow of aluminum from the interconnector 4 to the insert member 13 is suppressed, and the alumina layer is stably formed.

In the present embodiment, examples of the main component of the insert member 13 include nickel. Nickel has a significantly smaller mutual diffusion coefficient with aluminum as compared with FSS, and thus the effect of suppressing the outflow of aluminum from the interconnector 4 is great.

In the present embodiment, a material containing aluminum may be used for the insert member 13. Aluminum is also contained in the insert member 13, and thus the concentration gradient of aluminum between the interconnector 4 and the insert member 13 becomes small, and the outflow of aluminum from the interconnector 4 can be suppressed.

In the present embodiment, the insert member 13 may be a paste containing ferritic stainless steel as a main component and containing aluminum. In a case of a paste-like insert member 13, the aluminum content can be easily adjusted as compared with a foil-like insert member 13, and the heating temperature in the laminating step can be suppressed.

In the present embodiment, the pre-oxidation step of performing the oxidation treatment on the interconnector 4 may be performed before performing the laminating step. By forming the alumina layer on the outermost layer of the interconnector 4 in advance, the formation period of the alumina layer during the operation of the fuel cell is shortened, and thus the water vapor oxidation resistance in a lower temperature range at startup or the like is improved.

In the present embodiment, when the pre-oxidation step is performed, the oxidation treatment is performed at 900°C or higher. Accordingly, the formed alumina layer becomes so-called α-alumina that is high in stability and is hard to grow abnormally, and thus a supply rate of aluminum for forming the alumina layer is suppressed during the operation of the fuel cell, and the water vapor oxidation resistance can be maintained over a long period.

Although the embodiment of the present invention has been described above, the above embodiment is merely a part of application examples of the present invention and does not intend to limit the technical scope of the present invention to the specific configurations of the above embodiment.

## Claims

1. A solid oxide fuel cell comprising:
a plurality of power generation cells laminated in a thickness direction via an interconnector, wherein
the power generation cells each include a solid electrolyte plate, an anode electrode disposed on one surface of the solid electrolyte plate, an anode support layer configured to support the anode electrode, a cathode electrode disposed on the other surface of the solid electrolyte plate, and a cathode support layer configured to support the cathode electrode,
the interconnector is configured to electrically connect the anode support layer of one of the adjacent power generation cells and the cathode support layer of the other one of the adjacent power generation cells,
the anode support layer and the cathode support layer are made of ferritic stainless steel, and
the interconnector is made of ferritic stainless steel containing aluminum.

2. The solid oxide fuel cell according to claim 1, wherein
a thickness of a base material for the interconnector is smaller than a thickness of the anode support layer and a thickness of the cathode support layer.

3. The solid oxide fuel cell according to claim 1 or 2, wherein
the interconnector is formed of a single plate material, and includes a cathode side rib protruding toward the cathode electrode, and an anode side rib protruding toward the anode electrode, and
the cathode side rib is in contact with the cathode support layer, and the anode side rib is in contact with the anode support layer.

4. The solid oxide fuel cell according to claim 3, wherein
a width of a contact portion between the anode side rib and the anode support layer is larger than a width of a contact portion between the cathode side rib and the cathode support layer.

5. The solid oxide fuel cell according to any one of claims 1 to 4, wherein
a connection portion between the interconnector and the anode support layer of one of the adjacent power generation cells and a connection portion between the interconnector and the cathode support layer of the other one of the adjacent power generation cells are joined to each other via an insert member, and
the insert member contains, as a main component, a material having a smaller mutual diffusion coefficient with aluminum in a joining surface compared with a case in which the interconnector is joined to the anode support layer and the cathode support layer without the insert member interposed therebetween.

6. The solid oxide fuel cell according to claim 5, wherein
the main component of the insert member is nickel.

7. The solid oxide fuel cell according to claim 5 or 6, wherein
the insert member contains aluminum.

8. The solid oxide fuel cell according to claim 5, wherein
the insert member is a paste containing ferritic stainless steel as a main component and containing aluminum.

9. A method for producing a solid oxide fuel cell, comprising:
a laminating step of laminating a plurality of power generation cells in a thickness direction via an interconnector, wherein
the power generation cells each include a solid electrolyte plate, an anode electrode disposed on one surface of the solid electrolyte plate, an anode support layer configured to support the anode electrode, a cathode electrode disposed on the other surface of the solid electrolyte plate, and a cathode support layer configured to support the cathode electrode,
the interconnector is configured to electrically connect the anode support layer of one of the adjacent power generation cells and the cathode support layer of the other one of the adjacent power generation cells,
the anode support layer and the cathode support layer are made of ferritic stainless steel,
the interconnector is made of ferritic stainless steel containing aluminum, and
a pre-oxidation step of performing an oxidation treatment on the interconnector is performed before the laminating step.

10. The method for producing a solid oxide fuel cell according to claim 9, wherein
the oxidation treatment in the pre-oxidation step is performed at 900°C or higher.
